# EUROPÄISCHE PATENTANMELDUNG

(11) **EP 2 518 106 A1**
(43) Veröffentlichungstag der Anmeldung: **31.10.2012**
(21) Anmeldenummer: 11162802.0
(22) Anmeldetag: 18.04.2011
(51) Int. Cl.: C08L 7/00, C08L 9/00, C08L 21/00, C08K 3/36, C08K 5/00

(54) **Kautschukmischung**

(71) Anmelder: Continental Reifen Deutschland GmbH, 30165 Hannover (DE)
(72) Erfinder: Kendziorra, Norbert, 30827 Garbsen (DE); Becker, Albrecht, 40625 Düsseldorf (DE)
(74) Vertreter: Finger, Karsten

(57) **Zusammenfassung**

Die Erfindung betrifft eine Kautschukmischung, insbesondere für Fahrzeugluftreifen, Gurte, Riemen und Schläuche, mit verbesserter Griffeigenschaft auf winterlichen Fahrbahnen auszeichnet.

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So zieht eine Verbesserung der Wintereigenschaft, insbesondere des Schneegriffs weiterhin in der Regel eine Verschlechterung des Handlings und des Trockenbremsens nach sich. Diese Eigenschaften sind auch bei technischen Gummiartikeln, wie Gurte, Riemen und Schläuche, ein wichtiges Qualitätskriterium, vor allem beim Einsatz im Außenbereich bei winterlichen Temperaturen.

Um diese Zielkonflikte zu lösen, sind schon vielfältige Ansätze verfolgt worden. So hat man beispielsweise unterschiedlichste, auch modifizierte, Polymere, Weichmacher und hochdisperse Füllstoffe für Kautschukmischungen eingesetzt und man hat versucht, die Vulkanisateigenschaften durch Variationen der Mischungszusammensetzung zu beeinflussen.

So ist beispielsweise aus EP1375199A1 bekannt, Kurzfasern in die Kautschukmischung für den Laufstreifen eines Reifens einzumischen oder aus US 5,246,985 Zellulosematerial zu verwenden, um die Wintereigenschaften zu verbessern.

Ebenso wird versucht durch eher konstruktive Maßnahmen eine Verbesserung der Wintereigenschaften zu erzielen. So wird beispielsweise in US 5,840,137 der Laufstreifen kompositartig mit verschiedenen Kautschukzusammensetzungen aufgebaut oder in DE 10 2004 002 255 A1 ein hartes und dennoch flexibles Kunststoffgewebe in den Laufstreifen integriert.

Allen diesen Maßnahmen ist jedoch gemein, dass sie sich eher negativ auf mindestens eine weitere Reifeneigenschaft auswirken, insbesondere das Trockenbremsverhalten beeinträchtigen.

Der Erfindung liegt daher die Aufgabe zu Grunde, eine Kautschukmischung, insbesondere für Fahrzeugluftreifen, Gurte und Riemen, bereitzustellen, die sich durch verbesserte Griffeigenschaften auf winterlichen Fahrbahnen, insbesondere auf schneebedeckten Fahrbahnen und insbesondere bei Temperaturen kleiner oder gleich 0°C, aufweist, ohne jedoch die weiteren physikalischen Eigenschaften Handling und Trockenbremsen negativ zu beeinflussen.

Gelöst wird diese Aufgabe durch die Bereitstellung einer Kautschukmischung, welche bei Verwendung in einer Pendeleinrichtung mit einer trockenen Kugeloberfläche eine positive Stoßkraft Fₘₐₓ und eine negative Abzugskraft Fₘᵢₙ besitzt und welche wenigstens einen Dienkautschuk und wenigstens eine Kieselsäure enthält, wobei der Betrag der negativen Abzugskraft Fₘᵢₙ zwischen 2 und 30 % der maximalen positiven Stoßkraft Fₘₐₓ beträgt.

Überraschenderweise wurde gefunden, dass eine derartige Kautschukmischung bei Temperaturen kleiner oder gleich 0°C deutlich verbesserte Griffeigenschaften aufweist,

während die weiteren physikalischen Eigenschaften auf einem ähnlichen Niveau verbleiben.

Die erfindungsgemäße Kautschukmischung enthält wenigstens einen Dienkautschuk und wenigstens eine Kieselsäure und der Betrag der negativen Abzugskraft Fₘᵢₙ beträgt zwischen 2 und 30 % der maximalen positiven Stoßkraft Fₘₐₓ. Die Abzugskraft und die Stoßkraft (Fₘᵢₙ und Fₘₐₓ) wurden analog des in Kröger et al. "Machine Dynamics Problems", 2004, Vol. 28, No. 1, p. 79 - 89, beschriebenen Verfahrens mittels eines Adhäsionspendels bestimmt.

Die Messbedingungen werden dabei wie folgt eingestellt:
Pendelgewicht m: 2 bis 300 g
Impaktgeschwindigkeit ν₀: 100 bis 2000 mm/s
Prallkugelradius R: 2 bis 20 mm
Kautschukdicke tᵣ: 2 bis 30 mm
Kugeloberfläche: hartes mineralisches oder metallisches Material

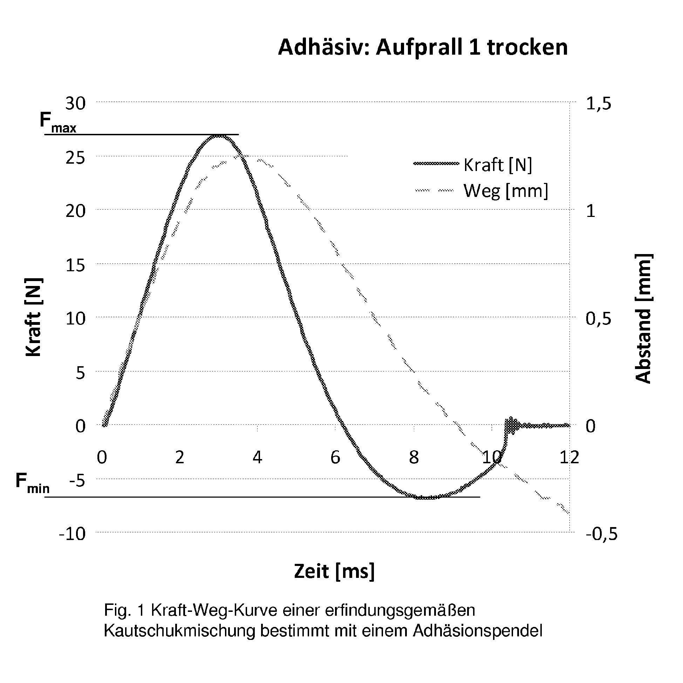

Bei der Abzugskraft handelt es sich um eine negative Kraft, die beim Ablösevorgang vom Pendel auftritt und sich nur bei adhäsiven Mischungen zeigt. Fₘᵢₙ ist dabei die maximale Kraft beim Abzugsvorgang (siehe Figur 1). Bei einer nicht-adhäsiven Mischung gibt es keine Abzugskraft bzw. ist die Abzugskraft derart gering, dass sie lediglich um die Nulllage schwankt.

Die Kugeloberfläche ist trocken und gereinigt, d.h. sie ist frei von organischen Anhaftungen wie Fetten, Seifen, Alterungsschutzmitteln und Wachsen und frei von Stäuben.

Im Gegensatz zu einer statischen Adhäsion, die bei Gummiproben bzw. Kautschukmischungsproben oftmals durch intensives Anpressen zu erreichen ist, handelt es sich hier um einen schnell ablaufenden Adhäsionseffekt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

In einer besonders vorteilhaften Ausführungsform enthält die Kautschukmischung 70 bis 100 phr, bevorzugt 80 bis 100 phr und besonders bevorzugt 90 bis 100 phr, zumindest eines natürlichen oder synthetischen Polyisoprens und / oder zumindest eines Polybutadienkautschuks mit einem Vinylanteil von 40 bis 85 Gew. -%.

Besonders gute Trockenbremseigenschaften ergeben sich, wenn der Polybutadienkautschuk einen Vinylanteil von 40 bis 80 Gew. -% hat.

Besonders gute Ergebnisse zeigen sich, wenn die Kautschukmischung zusätzlich wenigstens 0,1 phr, bevorzugt 0,1 bis 60 phr, besonders bevorzugt 1 bis 50 phr, ganz besonders bevorzugt 20 bis 50, zumindest eines Styrolbutadienkautschuks enthält.

Der Styrolbutadienkautschuk kann hierbei lösungspolymerisiert oder emulsionspolymerisiert sein. Bei Verwendung eines lösungspolymerisierten Styrolbutadienkautschuks kann dieser hydriert sein und / oder mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert sein. Es kommen aber auch weitere, der fachkundigen Person bekannte, Modifizierungen, auch als Funktionalisierungen bezeichnet, in Frage

Ebenso können weitere polare oder unpolare Kautschuke wie beispielsweise Halobutylkautschuk und / oder Polynorbornen und / oder Ethylen-Propylen-DienKautschuk und / oder Nitrilkautschuk und / oder Chloroprenkautschuk und / oder AcrylatKautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder Halonitrilbutylkautschuk und / oder Isopren-Butylen-Copolymer eingesetzt werden.

Kombinationen aller genannten Kautschuke sind durchaus möglich.

Es können in der Kautschukmischung noch 0 bis 80 phr, bevorzugt 0 bis 70 phr, besonders bevorzugt 0 bis 60 phr, wenigstens aber 0,1 phr, insbesondere wenigstens 0,5 phr, zumindest eines Weichmachers vorhanden sein.

Dieser Weichmacher ist ausgewählt aus der Gruppe, bestehend aus Mineralölen und / oder synthetischen Weichmachern und / oder Harzen und / oder Faktisse und / oder Glyceriden und / oder Fettsäuren und / oder Fettsäurederivaten und / oder Terpenen und / oder flüssige Polymere mit einem Molekulargewicht M_{w} zwischen 500 und 10000 g / mol und / oder Saatenöle und / oder BiomassToLiquid- (BTL-)Öle und / oder RubberToLiquid-(RTL-)Öle.

Die Verwendung von Mineralölen und / oder flüssigen Polymeren mit einem Molekulargewicht M_{w} zwischen 500 und 10000 g / mol und / oder Harzen hat sich als besonders vorteilhaft herausgestellt. Das Molekulargewicht M_{w} wurde mit herkömmlicher Gelpermeationschromatographie (GPC) bestimmt.

Bei der Verwendung von Mineralöl als Weichmacher ist dieses bevorzugt ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Als Saatenöle kommen beispielsweise Rapsöl und /oder Sonnenblumenöl in Frage.

Erfindungsgemäß enthält die Kautschukmischung 40 bis 250 phr, bevorzugt 50 bis 250 phr, besonders bevorzugt 60 bis 200 phr, Kieselsäure.

Es können alle der fachkundigen Person bekannten Kieselsäuretypen verwendet werden. Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Vorteilhafterweise werden Kieselsäuren mit einer Stickstoff-Oberfläche größer oder gleich 100 m²/g, bevorzugt zwischen 120 und 300 m²/g, besonders bevorzugt zwischen 140 und 250 m²/g, und einer CTAB-Oberfläche zwischen 100 und 250 m²/g, bevorzugt zwischen 120 und 230 m²/g und besonders bevorzugt zwischen 140 und 200 m²/g, eingesetzt.

Falls ein Kupplungsagens, in Form von Silan oder einer siliziumorganischen Verbindung, verwendet wird, so beträgt die Menge des Kupplungsagens 0,1 bis 40 phr, bevorzugt 1 bis 15 phr, besonders bevorzugt 1,5 bis 10 phr. Als Kupplungsagenzien können dabei alle der fachkundigen Person für die Verwendung in Kautschukmischungen bekannte Kupplungsagenzien verwendet werden, wie bspw. TESPT und / oder TESPD. Besonders zu erwähnen sind hierbei Mercaptosilane, insbesondere geblockte Mercaptosilane, und hierbei insbesondere solche, welche sich durch eine Reduzierung der leicht flüchtigen organischen Bestandteile auszeichnen, wie sie, beispielhaft für weitere Druckschriften, in DE102005057801, WO99/09036, WO2002/048256 und WO2006/015010 zu finden sind. Derartige Mercaptosilane sind zum Beispiel unter dem Handelsnamen Si363 von Evonik Industries erhältlich. Es können aber auch die unter den Handelsnamen bekannten NXT-, NXT low VOC- oder NXT-Z-Typen, erhältlich von Momentive Performance Materials inc., verwendet werden.

Die Verwendung eines solchen Mercaptosilans zeigt besondere Vorteile hinsichtlich des Trockenbremsverhaltens.

Des Weiteren enthält die erfindungsgemäße Kautschukmischung 0 bis 30 phr, wenigstens aber 0,1 phr, insbesondere wenigstens 0,5 phr, zumindest eines Rußes. Hier kommen alle der fachkundigen Person bekannten Ruße in Frage.

In einer besonders bevorzugten Ausführungsform hat der Ruß eine Iodzahl, gemäß ASTM D 1510, die auch als Iodadsorptionszahl bezeichnet wird, größer oder gleich 75 g / kg und einer DBP-Zahl größer oder gleich 80 cm³ /100g, bevorzugt größer oder gleich 115 cm³ /100g.

Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Russtyps in der Kautschukmischung, insbesondere für Fahrzeugluftreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Russtyp in der jeweiligen Kautschukmischung verwendet wird, es können aber auch verschiedene Russtypen in die Kautschukmischung eingemischt werden.

Weiterhin enthält die Kautschukmischung noch weitere Zusatzstoffe.

Weitere Zusatzstoffe beinhaltet im Wesentlichen das Vernetzungssystem (Vernetzer, Schwefelspendern und / oder elementaren Schwefel, Beschleuniger und Verzögerer), Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 - 80 phr.

Die Vulkanisation der Kautschukmischung wird vorzugsweise in Anwesenheit von elementarem Schwefel oder Schwefelspendern durchgeführt, wobei einige Schwefelspender zugleich als Vulkanisationsbeschleuniger wirken können. Elementarer Schwefel oder Schwefelspender werden im letzten Mischungsschritt in den vom Fachmann gebräuchlichen Mengen (0,4 bis 10 phr, elementarer Schwefel bevorzugt in Mengen von 0 bis 6 phr, besonders bevorzugt in Mengen von 0,1 bis 4 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer und Vulkanisationsaktivatoren, die in den obig beschriebenen Zusatzstoffen enthalten sind, enthalten.

Vorteilhaft ist es, wenn die erfindungsgemäße Kautschukmischung 0,1 bis 6 phr, bevorzugt 1 bis 5 phr, zumindest eines Vulkanisationsbeschleunigers enthält.

Der Vulkanisationsbeschleuniger ist bevorzugt ausgewählt ist aus der Gruppe der Sulfenamidbeschleuniger und / oder Thiazolbeschleuniger und / oder Thiurambeschleuniger und / oder Mercaptobeschleuniger und / oder Dithiocarbamatbeschleuniger und /oder Aminbeschleuniger und / oder Dithiophosphate und / oder Thioharnstoffe, wobei Sulfenamidbeschleuniger und / oder Guanidinbeschleuniger bevorzugt sind.

Als Sulfenamidbeschleuniger findet bevorzugt Benzothiazyl-2-cyclohexylsulfenamid (CBS) und als Guandidinbeschleuniger bevorzugt Diphenylguanidin (DPG) Verwendung.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Reifen, insbesondere zur Herstellung des Laufstreifens eines Reifens und / oder einer Body-Mischung eines Reifens und zur Herstellung von Riemen, Gurten und Schläuchen zu verwenden. Die Erfindung kann hierbei zur Herstellung von Pkw-Reifen und / oder Lkw-Reifen verwendet werden, wobei die Verwendung in Pkw-Reifen bevorzugt ist.

Als Body-Mischung eines Reifens werden unter anderem Seitenwand, Innenseele, Apex, Gürtel, Schulter, Gürtelprofil, Squeege, Karkasse, Wulstverstärker und / oder Bandage bezeichnet.

Die Erfindung soll nun anhand von Vergleichs- und Ausführungsbeispielen, die in Tabellen 1 und 2 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt. Die mit "a" gekennzeichneten Tabellen stellen dabei die Mischungszusammensetzung dar, während die mit "b" gekennzeichneten Tabellen die dazugehörigen entsprechenden physikalischen Eigenschaften am Reifen oder im Labormaßstab illustrieren.

Für die Bestimmung von Fmin und Fmax an einem Adhäsionspendel, analog des in Kröger et al. "Machine Dynamics Problems", 2004, Vol. 28, No. 1, p. 79 - 89, beschriebenen Verfahrens, wurden folgende Messbedingungen verwendet:
Pendelgewicht m: 120 g
Impaktgeschwindigkeit ν₀: 500 mm/s
Prallkugelradius R: 6 mm
Kautschukdicke tᵣ: 6 mm
Kugeloberfläche: Mineralische Siliziumnitrid Kugel mit einer Restrauheit r_{z} < 10 nm

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die in der Tabelle 1b zusammengefassten Versuchsergebnisse wurden an Reifen der Größe 205/55 R16 ermittelt. Hierzu wurde jeweils die Kautschukmischung für die Lauffläche des Reifens analog den in der Tabelle 1a dargestellten Zusammensetzungen hergestellt.

Der Schneegriff wurde als Schneetraktion, also als Beschleunigungsvermögen beim Anfahren im 1. Gang in m/sec², bestimmt.

Das Trockenbremsen ist der Bremsweg aus einer Geschwindigkeit von 100 km/h.

Das Handling ergibt sich aus der Bewertung des Testfahrers.

Für die Tabellen 2a und 2 b gilt:
Die Mischungsherstellung erfolgte unter üblichen Bedingungen in mehreren Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
   - Rückprallelastizität bei Raumtemperatur und 70°C gemäß DIN 53 512
   - Shore-A-Härte bei Raumtemperatur gemäß DIN 53 505
   - Spannungswert bei 300% Dehnung bei Raumtemperatur gemäß DIN 53 504
   - Verlustfaktor tan d, synonym zu tan δ, bei 55°C aus dynamisch-mechanischer Messung gemäß DIN 53 513
   - dynamischer Speichermodul E' bei 55 °C gemäß DIN 53 513 bei 8% Dehnung

**Tabelle 1a**

| **Bestandteile** | **Einheit** | **E1** | **V1** | **V2** | **E2** |
|---|---|---|---|---|---|
| NR^{a} | phr | 100 | 20 | 0 | 10 |
| BR^{b} | phr | -- | 50 | 45 | 30 |
| BR^{c} | phr | -- | -- | -- | 60 |
| SSBR^{d} | phr | -- | 30 | 55 | -- |
| Kieselsäure^{e} | phr | -- | 85 | -- | -- |
| Kieselsäure^{f} | phr | 80 | -- | 80 | -- |
| Kieselsäure^{g} | phr | -- | -- | -- | 98 |
| Ruß^{h} | phr | -- | -- | -- | 15 |
| Ruß, N339 | phr | 10 | 15 | 10 | -- |
| Silanⁱ | phr | 6 | 6 | -- | 8,7 |
| Weichmacher^{j} | phr | 40 | 55 | -- | 20 |
| Weichmacher^{k} | phr | -- | -- | 35 | 45 |
| ZnO | phr | 3 | 3 | 3 | 3 |
| Alterungsschutzmittel /Ozonschutzmittel | phr | 4 | 4 | 5,5 | 7 |
| DPG, CBS | phr | 3,9 | 3,6 | 3,3 | 5,8 |
| Schwefel | phr | 3 | 2,1 | 1,6 | 2,6 |

| | | | | | |
|---|---|---|---|---|---|
| ^{a} TSR ^{b} hoch-cis BR (cis-Anteil großer 95 Gew.-%) ^{c} hvBR, vinyl = 80 Gew. -%, Europrene, Fa. Polimeri ^{d} SSBR, VSL5025, Fa. Lanxess ^{e} VN3, Fa. Evonik (BET 173 m²/g, CTAB 164 m²/g) ^{f} Zeosil 1165MP, Fa. Rhodia (BET 149 m²/g, CTAB 154 m²/g) ^{g} Zeosil HRS 1200 MP, Fa. Rhodia (BET 195 m²/g, CTAB 200 m²/g) ^{h} N121 oder vergleichbarer ⁱ TESPD ^{j} TDAE ^{k} flussiger Polybutadienkautschuk, M_{w} max. 500g/mol | | | | | |

**Tabelle 1b**

| **Eigenschaften** | **Einheit** | **E1** | **V1** | **V2** | **E2** |
|---|---|---|---|---|---|
| Fₘᵢₙ | N | -6 | 0 | 0 | -4 |
| Fₘₐₓ | N | 60 | 60 | 60 | 60 |
| Verhältnis | % | 10 | -- | -- | 6,7 |
| lFₘᵢₙl / Fₘₐₓ | | | | | |
| Schneegriff | % | 108 | 100 | 100 | 102 |
| Trockenbremsen | % | 102 | 100 | 102 | 100 |
| Handling | % | 100 | 100 | 100 | 100 |

Die Werte sind auf die Vergleichsmischung V1 normiert. Werte größer als 100% bedeuten eine Verbesserung der genannten Eigenschaft. Im Vergleich zu V1 zeigen E1 und E2 deutliche Verbesserung hinsichtlich des Schneegriffs, während die weiteren Eigenschaften Trockenbremsen und Handling nicht negativ beeinträchtigt werden. Für E1 zeigt sich sogar eine Verbesserung des Trockenbremsens. Der Vergleich der adhäsiven Mischung E1 mit der nicht adhäsiven Mischung V2, welche sich auf gleichem Steifigkeitsniveau, gleichem Dämpfungsniveau befinden und eine gleiche dynamische Glasstemperatur besitzen, zeigt den Vorteil im Schneegriff.

**Tabelle 2a**

| **Bestandteile** | **Einheit** | **E3** | **E4** | **E5** | **E6** |
|---|---|---|---|---|---|
| Polyisopren^{a} | phr | 37,5 | 10 | 10 | 10 |
| Butadienkautschuk^{b} | phr | 62,5 | 40 | 40 | 40 |
| Styrolbutadienkautschuk^{c} | phr | - | - | - | 20 |
| Styrolbutadienkautschuk^{d} | phr | - | 50 | 50 | 30 |
| Ruß, N121 | phr | 8 | 8 | 8 | 8 |
| Kieselsäure^{e} | phr | 76 | - | - | - |
| Kieselsäure^{f} | phr | - | 76 | 76 | 76 |
| TESPD | phr | 6,2 | 6,2 | - | - |
| Mercaptosilan (NXT-Silan) | phr | - | - | 5,4 | 2,7 |
| Weichmacher^{g} | phr | 19,5 | 19,5 | 19,5 | 19,5 |
| Weichmacher^{h} | phr | 47 | 47 | 47 | 47 |
| Zinkoxid | phr | 1,5 | 1,5 | 1,5 | 1,5 |
| Zusatzstoffeⁱ | phr | 10 | 10 | 10 | 10 |
| Beschleuniger^{j} | phr | 5,5 | 4,5 | 4,5 | 4,5 |
| Schwefel | phr | 2 | 2 | 2 | 2 |

| | | | | | |
|---|---|---|---|---|---|
| ^{a} NR, TSR ^{b} hoch-cis BR (cis-Anteil großer 95 Gew.-%) ^{c} SSBR, NS616, Nippon Zeon, Hydroxylgruppenmodifiziert, vinyl 61, styrol 21 ^{d} SSBR, NS612, Nippon Zeon, Hydroxylgruppenmodifiziert, vinyl 30, styrol 15 ^{e} Zeosil HRS1200 MP, Fa. Rhodia (BET 195 m²/g, CTAB 200 m²/g) ^{f} Zeosil Premium 200MP, Fa. Rhodia, CTAB 200 m²/g, BET 215 m²/g ^{g} MES ^{h} flussiger Butadienkautschuk, LBR-307, Fa. Kuraray ⁱ DTPD, 6PPD, TMQ, Ozonschutzwachs, Stearinsaure, weitere Hilfsstoffe ^{j} DPG, CBS | | | | | |

**Tabelle 2b**

| **Eigenschaft** | **Einheit** | **E3** | **E4** | **E5** | **E6** |
|---|---|---|---|---|---|
| Härte (kond.) | Shore A | 46,8 | 42,6 | 42,1 | 41,6 |
| Rückprall bei RT | % | 37 | 37 | 37 | 33 |
| Rückprall bei 70°C | % | 40 | 40 | 37 | 34 |
| Spannungswert 300% | MPa | 4,3 | 3,4 | 3,0 | 2,8 |
| E'(8%) | MPa | 3,4 | 3,3 | 3,2 | 3,6 |
| tan d | | 0,19 | 0,20 | 0,21 | 0,22 |
| Fₘᵢₙ | N | -5,05 | -3,56 | -3,50 | -3,97 |
| Fₘₐₓ | N | 28,82 | 28,23 | 29,49 | 29,82 |
| Verhältnis \|Fₘᵢₙ\| / Fₘₐₓ | % | 17,52 | 12,61 | 12,07 | 13,31 |

Basierend auf Tabelle 1b, lässt sich feststellen, dass alle erfindungsgemäßen Mischungen, d.h. Mischungen bei denen der Betrag der negativen Abzugskraft Fₘᵢₙ zwischen 2 und 30 % der maximalen positiven Stoßkraft Fₘₐₓ beträgt, Vorteile hinsichtlich des Schneegriffverhaltens ohne negativen Einfluss auf die Handlingeigenschaften aufweisen. Ausgehend davon, dass auch die erfindungsgemäßen Mischungen E3 bis E6 verbesserte Schneegriffeigenschaften zeigen, lässt sich zusätzlich anhand der Laborangaben für E'(8%) und tan d in Tabelle 2b erkennen, dass sowohl die statische als auch die dynamische Steifigkeit auf gleichem Niveau verbleiben, was wiederum vergleichbare Handlingeigenschaften im Reifen bedeutet.

## Patentansprüche

1. Kautschukmischung, welche bei Verwendung in einer Pendeleinrichtung mit einer trockenen Kugeloberfläche eine positive Stoßkraft Fₘₐₓ und eine negative Abzugskraft Fₘᵢₙ besitzt und welche wenigstens einen Dienkautschuk und wenigstens eine Kieselsäure enthält, **dadurch gekennzeichnet, dass** der Betrag der negativen Abzugskraft Fₘᵢₙ zwischen 2 und 30 % der maximalen positiven Stoßkraft Fₘₐₓ beträgt.

2. Kautschukmischung nach Anspruch 1, **dadurch gekennzeichnet, dass** der Betrag der Betrag der negativen Abzugskraft Fₘᵢₙ zwischen 5 und 30 % der maximalen positiven Stoßkraft Fₘₐₓ beträgt.

3. Kautschukmischung nach Anspruch 1 oder 2, **dadurch gekennzeichnet, dass** sie 70 bis 100 phr zumindest eines natürlichen oder synthetischen Polyisoprens und / oder zumindest eines Polybutadienkautschuks mit einem Vinylanteil von 40 bis 85 Gew. -% enthält.

4. Kautschukmischung nach einem der Ansprüche 1 bis 3, **dadurch gekennzeichnet, dass** sie wenigstens 0,1 phr zumindest eines Styrolbutadienkautschuks enthält.

5. Kautschukmischung nach einem der Ansprüche 1 bis 4, **dadurch gekennzeichnet, dass** sie 0 bis 80 phr zumindest eines Weichmachers enthält.

6. Kautschukmischung nach einem der Ansprüche 1 bis 5, **dadurch gekennzeichnet, dass** sie 40 bis 250 phr wenigstens einer Kieselsäure enthält.

7. Verwendung einer Kautschukmischung nach einem der Ansprüche 1 bis 6 zur Herstellung eines Reifens.

8. Verwendung einer Kautschukmischung nach Anspruch 7 zur Herstellung des Laufstreifens und / oder einer Body-Mischung eines Reifens.

9. Verwendung einer Kautschukmischung nach einem der Ansprüche 1 bis 6 zur Herstellung eines Gurtes, Riemens oder Schlauches.
